(19) Europäisches Patentamt
European Patent Office
Office européen des brevets

(11) Publication number: **0 106 562**
**A1**

(12) # EUROPEAN PATENT APPLICATION

(21) Application number: 83305577.5

(22) Date of filing: 21.09.83

(51) Int. Cl.[3]: A 01 N 43/80
A 01 N 25/32, A 01 N 25/22
A 01 N 25/12, C 02 F 1/50

(30) Priority: 23.09.82 US 422498

(43) Date of publication of application:
25.04.84 Bulletin 84/17

(84) Designated Contracting States:
AT BE CH DE FR GB IT LI LU NL SE

(71) Applicant: Rohm and Haas Company
Independence Mall West
Philadelphia, Pennsylvania 19105(US)

(72) Inventor: Burke, James David
2422 Rosemore Avenue
Glenside, PA 19038(US)

(72) Inventor: Richmond, Reid Curtis
2614 Gasser Boulevard
Rocky River Ohio 44116(US)

(74) Representative: Angell, David Whilton et al,
Rohm and Haas Company Patent Department
Chesterfield House Bloomsbury Way
London WC1A 2TP(GB)

(54) **Solid microbiocidal compositions and methods for safening isothiazolone microbiocides and controlling living microorganisms.**

(57) Solid flowable, non-dusting particulate microbiocidal compositions useful in aqueous systems comprise 0.1 to 70 weight percent water soluble microbiocidal compound in admixture with 99.9 to 30 weight percent inert finely-divided water-insoluble solid carrier material. Especially useful microbiocidal compounds are 3-isothiazolones and 2-substituted-1,2-benzisothiazolones, which may be stablised with metal salts. Silicaceous diatomaceous earth is preferred as the inert material. These compositions afford a safer form of the active ingredient heretofore known to be relatively irritating to the skin of man when at high concentrations in aqueous solution. Methods of safening microbiocidal isothiazolones comprise admixing an aqueous solution thereof, optionally containing metal salt stabiliser with the carrier or admixing solutions of the isothiazolone and metal salt stabiliser in inert volatile solvent with the inert carrier and evaporating the solvent.

EP 0 106 562 A1

# SOLID MICROBIOCIDAL COMPOSITIONS AND METHODS FOR SAFENING ISOTHIAZOLONE MICROBIOCIDES AND CONTROLLING LIVING MICROORGANISMS

This invention is concerned with solid microbiocidal compositions and methods for safening isothiazolones microbiocides and controlling living microorganisms. Microbiocidal compounds of special interest are 3-isothiazolones and 2-substituted-1,2-benzisothiazolones (hereafter "isothiazolones"), which have a known tendency to impart skin irritancy to man and to evolve nontoxic gases when provided in aqueous solution at concentrations convenient for shipping.

The isothiazolones are a class of chemical compounds known to possess excellent and useful microbiocidal properties and resistance to common additives and contaminants. Many 3-isothiazolones are disclosed in U.S. Patents 3,761,488; 3,849,430, 3,870,795; 4,067,878; 4,150,026 and 4,241,214. U.S. Patents 3,517,022; 3,065,123; and 3,761,489 disclose 2-substituted-1,2-benzisothiazolones. U.S. Patent 3,849,430 discloses a method for preparing the isothiazolones.

While these patent specifications disclose the use of isothiazolones in a variety of microbiocidal end uses such as, for example, those uses and formulations and compositions disclosed in U.S. Patent 3,761,488 at columns 15-19 and in the actual examples thereafter, isothiazolones are generally made available in combination with a liquid carrier such as water or in aqueous compositions. Column 19, line 66 _et seq._ discloses that isothiazolones can be taken up or mixed with a finely divided particled solid carrier, as for example, clays, inorganic silicates, carbonates, silicas and organic carriers. Column 20, line 25 _et seq_. discloses that a convenient method for preparing a solid formulation is to impregnate the isothiazolone toxicant onto the solid carrier by means of a volatile solvent, such as acetone. However, attempts to produce

solid formulations have resulted in formulations which tended to coalesce (or "cake") or to give extremely lightweight particles (or "dusts").

U.S. Patent 4,011,172 discloses chlorine bleaching compounds dissolved in water or other suitable solvent thickened by the addition of particulate thickening agent, for example, silicate materials, water-swellable and water-soluble polyacrylamides and cellulose derivatives, and synthetic clays, the thickened bleaching compounds being contained in a perforated pouch made of plastics material.

Isothiazolones are commonly provided in commerce in aqueous solution, usually with inorganic, alkaline earth metal salts as stabilizers to prevent reactions which render them less active to microorganisms. Although solid alkaline earth metal salt complexes are known (U.S. Patents 4,150,026 and 4,241,214 mentioned above), these salt complexes suffer the disadvantage that they badly corrode processing equipment used to remove water in the course of producing the solid dry salt complex product, and the final solid salt complex product tends to be extremely dusty and thereby toxic to one during handling the product.

A typical, useful commercially available 3-isothiazolone product is Kathon 886 (Rohm and Haas Company), a metal salt-stabilized aqueous solution of 5-chloro-2-methyl-3-isothiazolone and 2-methyl-3-isothiazolone (3:1) containing 14% active ingredient and $Mg(NO_3)_2$ plus $MgCl_2$ as stabilizers. Such commercial products suffer the disadvantages of being irritating to the skin when spilled during handling and evolving nontoxic gases which build up pressure in sealed containers used in shipping and transportation.

It has been found that these disadvantages can be overcome by providing water-soluble microbiocidal compounds, especially 3-isothiazolones, in the form of dry solid compositions.

This invention provides a particulate solid microbiocidal composition useful in aqueous systems comprising:

(a) 0.1-70 weight %, based on total weight of said composition, of water-soluble microbiocidal compound; and

(b) about 99.9-30 weight %, based on total weight of said composition, of solid carrier material.

Preferably, in the particulate solid microbiocidal composition, microbiocidal compound (a) comprises water-soluble microbiocidally-effective isothiazolone, having a water-solubility of about 1000 ppm or greater, at room temperature (25°C) of the formula:

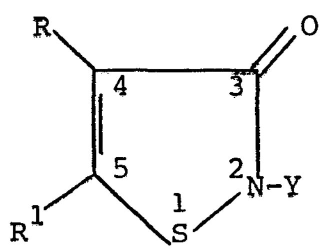

wherein

Y is an unsubstituted or substituted $C_1$-$C_{18}$ alkyl group, an unsubstituted or substituted $C_2$-$C_{18}$ alkenyl or alkynyl group, an unsubstituted or substituted $C_3$-$C_{12}$ cycloalkyl group, an unsubstituted or substituted aralkyl group of 6-10 carbon atoms, or an unsubstituted or substituted aryl group of 6-10 carbon atoms;

R is hydrogen, halogen or a $C_1$-$C_4$ alkyl group;

R' is hydrogen, halogen or a $C_1$-$C_4$ alkyl group; or

R and R' can be taken together with the C=C bond of the isothiazolone ring to form an unsubstituted or substituted benzene ring;

or said isothiazolone(s) stabilized with metal salt in an amount of 1-60 weight %, based on weight of isothiazolone and metal salt, said metal salt(s) being representd by the formula

$$(MX_n)$$

wherein

M is a cation of sodium, potassium, calcium, magnesium, copper, iron, zinc, barium, manganese, silver, cobalt and/or nickel;

X is chloride, bromide, iodide, sulfate, nitrate, nitrite, acetate, chlorate, perchlorate, bisulfate, bicarbonate, oxalate, maleate, p-toluene-sulfonate, carbonate, and/or phosphate; and

n is an integer for which the anion X satisfies the valence of the cation M;

and said solid carrier material (b) comprises inert finely-divided water-insoluble solid material selected from silicaceous diatomaceous earth, high water absorption capacity calcium silicate granular material, charcoal, clays, vermiculite, corn cobs high purity silica (e.g. Aerosil and Sipernet) and wood.

It is to be understood that, as the number of carbon atoms in the substituent group "Y" increases and as halogens are substituted on the isothiazolone ring, water-solubility decreases.

By a "substituted alkyl group" is meant an alkyl group having one or more of its hydrogens replaced by another substituent group. Examples of the substituted alkyl groups which characterize the isothiazolones preferably used in this invention include hydroxyalkyl, haloalkyl, cyanoalkyl, alkylamino, dialkylamino, arylaminoalkyl, carboxyalkyl, carbalkoxyalkyl, alkoxyalkyl, aryloxyalkyl, alkylthioalkyl,

arylthioalkyl, haloalkoxyalkyl, cycloaminoalkyl such as morpholinylalkyl and piperidinylalkyl and pyrrolodinylalkyl, carbamoxyalkyl, alkenyl, haloalkenyl, alkynyl, haloalkynyl and isothiazolonylalkyl.

By a "substituted aralkyl group" is meant an aralkyl group having one or more of the hydrogens on either the aryl ring or the alkyl chain replaced by another substituent group. Examples of the substituted aralkyl group which characterize the isothiazolones preferably used in this invention include halo, lower (i.e. $C_1$ to $C_8$ preferably $C_1$ to $C_4$) alkyl and lower alkoxy.

By a "substituted aryl group" and "substituted benzene ring" is meant an aryl group and benzene ring, respectively, such as phenyl, naphthyl, or pyridyl groups, having one or more of the hydrogens on the aryl ring replaced by another substituent group. Examples of such substituent groups include halo, nitro, lower alkyl, lower alkoxy, lower alkyl and acylamino, lower carbalkoxy and sulfonyl.

By the expression "water-soluble" as applied to the isothiazolones used in this invention is meant an isothiazolone or combination of isothiazolones characterized by having a water solubility of about 1000 ppm (0.1%) or greater at room temperature (25°C). Highly water-soluble isothiazolones can have a solubility even as high as from 150,000 ppm to nearly infinitely soluble.

By the expression "microbiocidal compound" is meant those compounds effective to control those microorganisms, especially of the group of bacteria, fungi (including molds and yeasts), and algae. In the method of the invention for controlling living microorganisms, by the expression "microorganisms" is meant bacteria, fungi, and algae.

When used alone, the expression "isothiazolones" is meant to include the "free" isothiazolones and the metal salt complexes of the free isothiazolones.

More preferably, the composition of the invention comprises (a) 1-35 weight %, based on total weight of said composition, of said isothiazolone wherein

Y is an unsubstituted or substituted $C_1$-$C_{18}$ alkyl group or $C_3$-$C_{12}$ cycloalkyl group;

R is hydrogen or halogen;

R' is hydrogen or halogen; or

R and R' are taken together with he C=C bond of the 3-isothiazolone ring to form a benzene ring;

or said isothiazolone stabilized with said metal salt; and (b) 99-65 weight %, based on total weight of said composition, of solid carrier material selected from silicaceous diatomaceous earth, high water absorption capacity calcium silicate granular material, and clays.

Most preferably, the composition of the invention comprises (a) 2-25 weight %, based on total weight of said composition, of said isothiazolone wherein Y is methyl, R is hydrogen and R' is chlorine; or of a mixture of said isothiazolones in aqueous solution wherein Y is methyl, R is hydrogen and R' is chlorine and Y is methyl, R is hydrogen and R' is hydrogen; or said isothiazolone(s) stabilized with said metal salt wherein said metal salt is $Mg(NO_3)_2$ or a mixture of $Mg(NO_3)_2$ and $MgCl_2$; and (b) 98-75 weight %, based on total weight of said composition, of silicaceous diatomaceous earth.

By way of example, there may be used in combination with the above-defined most preferred, or more preferred, isothiazolones, isothiazolone(s) having a water-solubility of about 500 ppm at room temperature wherein Y is n-octyl or t-octyl and R and R' are both hydrogen, providing, of course, that the water-solubility of the combination is 1000 ppm or greater.

Another aspect of the invention is a method for controlling living microorganisms in an aqueous system which

comprises incorporating into the aqueous system an amount of the composition of the invention sufficient to provide in the aqueous system a microbiocidally effective amount of said microbiocidal compound.

Yet another aspect of the invention is a method for safening microbiocidal isothiazolone compounds which comprises admixing aqueous or inert organic solvent solutions containing amounts of said isothiazolones or said isothiazolones stabilized with metal salt which are irritating to man with inert finely-divided water-insoluble solid carrier material to afford a non-dusting, flowable, stable, non-irritating solid formulation or composition of the microbiocidal compound convenient for handling and transporting.

The microbiocidal compositions according to the invention can afford several advantages. One such advantage is that the composition is a flowable, stable, non-irritating form of a microbiocidal composition, especially of an isothiazolone composition. This solid form is more convenient for handling, transporting, and shipping. Moreover, this solid form is safer in that it diminishes the chance of inadvertent, accidental exposure to the skin of the skin-irritating isothiazolones during the course of handling. Further, in the event of contact with the skin, this solid form can be detected more readily and can then be removed before isothiazolone can leach from the solid to effect skin irritance.

Further, in the preparation of the solid microbiocidal composition, an aqueous solution of the isothiazolones obtained in the production thereof can be absorbed onto the solid carrier material, so that no drying to remove, or evaporate, the water is required in order to obtain a flowable solid product.

We have also found that, whereas it has been observed

that aqueous solutions of isothiazolones are avantageously stabilized by metal salt, for example, magnesium salts, in the ratio of two equivalents of magnesium per equivalent of isothiazolone, here, in the solid compositions, the metal salt may still be effective in other stoichiometric amounts, especially in ratios less than two equivalents of metal per equivalent of isothiazolone, without restricting the stability of the isothiazolone.

The solid microbiocidal composition can be advantageously used in a variety of aqueous systems, such as, for example, in treating oil field waters, treating oil well drilling muds, as a dispersant for clay mining, as a component in cosmetic compositions, and in other aqueous systems in which the presence of freely-dispersed, finely-divided solid matter is of no concern or detriment.

Accordingly this invention, in one aspect, is directed to a method of making industrially useful aqueous systems with incorporated biostalic or biocidal properties.

In treating oil field waters and oil well drilling muds, a liquid form of a microbiocidal compound, such as, for example, Kathon 886 (Rohm and Haas Company) commonly is transferred from a shipping container to a smaller container, such as a lid-less bucket, and the "open" bucket filled with Kathon 886 is carried to the use site, such as a water tower, and up a ladder and emptied into the water tower. By substituting the solid composition of this invention for the liquid composition described above, problems of spillage and detection of spillage of liquid microbiocidal composition and resulting skin irritance are obviated by taking advantage of the non-dusting, flowable, easily detectable characteristics of the solid compositions of this invention.

The preparation and properties of representative isothiazolones are described in U.S. Patents 3,517,022;

3,761,488 and 3,065,123. U.S. Patent 3,849,430 further discloses a process for the preparation of representative isothiazolones. U.S. Patents 3,870,795 and 4,067,878 describe metal salt stabilized solutions of 3-isothiazolones which are useful according to this invention. Additional isothiazolones which are useful according to the invention are those disclosed in U.S. Patent 4,310,590.

The finely-divided water-insoluble solid material can for example be selected from silicaceous diatomaceous earth, high water absorption capacity calcium silicate material, and clays. Suitable silicaceous diatomaceous earth material is described in the Johns-Manville Corporation Technical Bulletin FF-160A, 10-80 concerning Celite Diatomite Filter Aids and Natural, Calcined, and Flux-Calcined Grades thereof. Suitable high water absorption capacity calcium silicate material is commercially available as "Micro-Cel" from the Johns-Manville Corporation.

Especially preferred is a diatomaceous earth material commercially available as Celite 545 (Johns-Manville Corporation).

Of course, conventional adjuvants and additives used in microbiocidal formulations and compositions may be incorporated into the solid microbiocidal compositions of this invention for example by first dissolving them in the aqueous or inert organic solvent solution of the isothiazolone(s) and then blending the solution with the solid carrier material. One useful additive for use in the solid microbiocidal composition of the invention is a dye which would impart a readily visible colour to the solid composition. Thus, whenever any solid microbiocidal composition would accidently be spilled onto the skin during handling, the spilled composition could readily be observed and removed before the toxicant could leach out of the solid and cause skin burns. This is in contrast to the case

involving accidental spillage of the aqueous microbiocidal solution of the isothiazolone when handling in association with an aqueous system in which case it would be difficult to distinguish between harmless aqueous system and toxic isothiazolone concentrate. Also, a chelating agent can be added in order to chelate metals, for example, iron, dissolved in the aqueous system.

The following Examples illustrate some embodiments of the invention. In the Examples all parts and percentages are by weight unless otherwise indicated and all temperatures are in degrees Centrigrade unless otherwise indicated. Percentages of the metal salts (magnesium nitrate and magnesium chloride) are based on the weight of the usual commercial form.

Example 1

To 75 g. of Celite 545 in a glass bottle was added 75 g. of Kathon 886[1]. The mixture was then stirred by hand with a spatula until it appeared to be uniformly mixed and free-flowing. No drying by heating was required or desired. The resulting solid product contained one-half of the initial amount of active ingredient per unit weight of product, that is, the solid composition contained 7 weight % of active ingredient. The resulting solid microbiocidal composition was stored in a sealed bottle for several days at room temperature. Thereafter, when the stopper was removed, there was observed no gas emission due to pressure build-up.

1.6 g. of the resulting solid microbiocidal composition was added to 1000 ml. of water to give 1001.6 g. total weight of water and solid microbiocidal composition. Analysis of the supernatant water by ultraviolet spectroscopy indicated that all of the Kathon 886 was released into the water within 5 minutes.

When added to a suitable aqueous system, in this case an oil well drilling mud as an example of a system in which freely-dispersed finely-divided solid matter is of no concern, this composition freely released all of the water soluble microbiocidal active ingredient, Kathon 886, within a few minutes. Of course, as the active ingredient becomes exhausted in the aqueous system, additional solid microbiocidal composition may be added.

[1]Kathon 886 is 5-chloro-2-methyl-3-isothiazolone blended with 2-methyl-3-isothiazolone in a weight ratio of 3:1 with 15 wt. % $Mg(NO_3)_2$ and 9 wt. % of $MgCl_2$ in aqueous solution containing 14% active ingredient, commercially available from the Rohm and Haas Company.

Example 2

A solid microbiocidal composition containing 20 weight % of active ingredient was prepared by dissolving 2.66 g. of crystalline 5-chloro-2-methyl-3-isothiazolone in 15 ml. of methanol. To this solution there was added 0.6 g. of $Mg(NO_3)_2.6\ H_2O$. The resulting solution was added to 10 g. of Celite 545 in a 4 fl. oz. bottle and the mixture was stirred by hand using a spatula until it appeared to be uniformly mixed and free-flowing. Methanol was removed by air drying overnight (or by heating the mixture under reduced pressure), and a uniform, free-flowing particulate solid was obtained. The solid was stored in a sealed bottle for several days at room temperature and thereafter, when the stopper was removed, there was observed no gas emission due to pressure build-up resulting from gas evolution from the solid composition. Upon adding the solid composition to water, all of the isothiazolone was released within minutes.

Example 3

This example illustrates the property of the solid microbiocidal composition whereby the solid composition tends not to evolve gasses to the extent that the known aqueous solutions of 3-isothiazolones evolve gasses even after heat treatment to eliminate volatile components.

The solid compositions were prepared as follows

Water was partially removed from Kathon 886 aqueous concentrate under reduced pressure (65° C/40 mm Hg), and solid carrier material (Celite 545, available from Johns-Manville Corporation, Attaclay X-250, available from the Minerals and Chemicals Corporation of America, Attapulgus Clay Products, HiSil T-600, available from Pittsburgh Plate and Glass Company, or mixtures thereof) was added to the residue to obtain a flowable solid composition.

The table below describes the formulation and properties of representative compositions.

| | | |
|---|---|---|
| The words | Kathon, | Aerosil, |
| | Celite, | Sipernet, |
| | Attaclay, | |
| | HiSil, | |
| | Micro-Cel | |

are trademarks which may or may not be registered in some or all of the designated States.

SOLID FORMULATIONS FROM KATHON 886[1] LIQUID CONCENTRATE

Components of the Formulations

| | | % Active Ingred. (by GLC) | |
|---|---|---|---|
| Form Number | 3A | 3B | 3C[6] |
| % AI[2] | 14.1 | 14.07 | 14.0 |
| % $Mg(NO_3)_2$ $6H_2O$ | 25.9 | 25.9 | 25.9 |
| % $MgCl_2$ $6H_2O$ | 19.2 | 19.2 | 19.2 |
| % "Free" $H_2O$ | 1.3 | 0.1 | 40.9 |
| % Celite 545[3] | 29.3 | - | - |
| % Attaclay[4] X-250 | - | 29.9 | - |
| % HiSil[5] T-600 | 10.2 | 10.8 | - |
| Gauge Pressure at 250°C after 15 hrs at 93°C $N/m^2 \times 10^{-3}$ (psi) | 17.8 (2.6) | 9.6 (1.4) | 82.2-89 (12-13) |
| Before Gassing Test | 13.6 | 11.4 | 14 |
| After Gassing Test | 11.5 | 10.7 | 13.8 |

[1] Kathon 886 is a 3.1 weight mixture of 5-chloro-2-methyl-3-isothioazolone and 2-methyl-3-isothiazolone, 14% active ingredient in aqueous solution, with 15% $Mg(NO_3)_2$ and 7% $MgCl_2$ available from the Rohm and Haas Company.

[2] AI = Active Ingredient

[3] Celite 545 available from the Johns-Manville Corporation

[4] Attaclay X-250 available from the Attapulgus Clay Company

[5] HiSil T-600 available from the Pittsburgh Plate and Glass Company

[6] Formulation 3C is the control for comparative purposes only.

CLAIMS

1. A flowable, non-dusting particulate solid microbiocidal composition useful in aqueous systems comprising:

(a) 0.1-70 weight %, based on total weight of said composition, of water-soluble microbiocidal compound; and

(b) 99.9-30 weight % based on total weight of said composition, of inert finely-divided water-insoluble solid carrier material.

2. A composition according to claim 1 wherein said composition comprises, as said microbiocidal compound (a), at least one water-soluble microbiocidally-effective isothiazolone, having a water-solubility at room temperature of 1000 ppm or greater, of the formula:

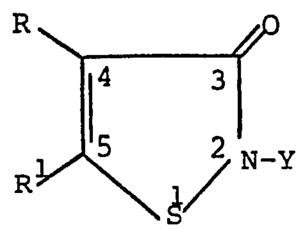

wherein

Y is an unsubstituted or substituted $C_1$-$C_{18}$ alkyl group, an unsubstituted or substituted $C_2$-$C_{18}$ alkenyl or alkynyl group, an unsubstituted or substituted $C_3$-$C_{12}$ cycloalkyl group, an unsubstituted or substituted aralkyl group of 6-10 carbon atoms, or an unsubstituted or substituted aryl group of 6-10 carbon atoms;

R is hydrogen, halogen or a $C_1$-$C_4$ alkyl group;

R' is hydrogen, halogen or a $C_1$-$C_4$ alkyl group; or

R and R' can be taken together with the C=C bond of the isothiazolone ring to form an unsubstituted or substituted benzene ring;

or at least one of said isothiazolones stabilized with at least one metal salt used in an amount of 1-60 weight %,

based on weight of 3-isothiazolone and metal salt, said metal salt being represented by the formula:

$$(MX_n)$$

wherein

M is a cation of a metal selected from sodium, potassium, calcium, magnesium, copper, iron, zinc, barium, manganese, silver, cobalt and nickel;

X is an anion selected from chloride, bromide, iodide, sulfate, nitrate, nitrite, acetate, chlorate, perchlorate, bisulfate, bicarbonate, oxalate, maleate, p-toluenesulfonate, carbonate, and phosphate; and

n is an integer for which the anion X satisfies the valence of the cation M;

and, as said solid carrier material (b), one or more of the following materials in inert finely-divided water-insoluble solid form; silicaceous diatomaceous earth, high water absorption capacity calcium silicate granular material, clays, charcoal, vermiculite, corn cobs, high purity silica and wood.

3. A composition according to claim 1 or 2 wherein said composition comprises (a) 1-35 weight %, based on total weight of said composition, of said isothiazolone wherein

Y is an unsubstituted or substituted $C_1$-$C_{18}$ alkyl group or $C_3$-$C_{12}$ cycloalkyl group;

R is hydrogen or halogen;

R' is hydrogen or halogen; or

R and R' are taken together with the C=C bond of the 3-isothiazolone ring to form a benzene ring;

or said isothiazolone stabilized with said metal salt; and (b) 99-65 weight %, based on total weight of said composition, of silicaceous diatomaceous earth, high water absorption capacity calcium silicate granular material, and/or a clay(s) as the solid carrier material.

4. A composition according to any preceding claim wherein said composition comprises (a) about 2-25 weight %, based on total weight of said composition, of isothiazolone wherein Y is methyl, R is hydrogen, and R' is chlorine or said isothiazolone stabilized with said metal salt wherein said metal salt is $Mg(NO_3)_2$ and or a mixture of $Mg(NO_3)_2$ and $MgCl_2$; and (b) about 98-75 weight % based on total weight of said composition, of silicaceous diatomaceous earth.

5. A composition according to any of claims 1 to 3 wherein said composition comprises (a) 2-25 weight %, based on total weight of said composition, of a mixture of isothiazolones wherein (i) Y is methyl, R is hydrogen and R' is chlorine and (ii) Y is methyl, R is hydrogen and R' is hydrogen, or said mixture of isothiazolones stabilized with $Mg(NO_3)_2$ or a mixture of $Mg(NO_3)_2$ and $MgCl_2$; and (b) 98-75 weight %, based on total weight of said composition, of silicaceous diatomaceous earth.

6. A composition according to any of claims 1 to 3 wherein said composition comprises as component (a) a mixture of said isothiazolone with isothiazolone having a water-solubility less than 1000 ppm at room temperature wherein Y is n-octyl or t-octyl, R is hydrogen and R' is hydrogen, provided that the combined solubility remains at least 1000 ppm at room temperature, or said combination stabilized with $Mg(NO_3)_2$ or a mixture of $Mg(NO_3)_2$ and $MgCl_2$; and (b) about 98-75 weight %, based on total weight of said composition, of silicaceous diatomaceous earth.

7. A method for controlling living microorganisms in an aqueous system which comprises incorporating into the aqueous system an amount of the composition of any preceding

claim, especially claims 3 or 6, sufficient to provide in the aqueous system a microbiocidally effective amount of said microbiocidal compound.

8. A method according to claim 7 wherein said aqueous system is an oil well field water, oil well drilling mud, clay mining dispersant system or cosmetic composition. 9. A method for safening microbiocidal isothiazolones which comprises admixing an aqueous solution containing an amount of said isothiazolone or metal salt stabilized isothiazolone which would be irritating to the skin of man, with inert finely-divided water-insoluble solid carrier material to afford a flowable, non-dusting, non-irritating, stable, non-gassing solid formulation of the microbiocidal compound convenient for handling and transporting.

10. A method for safening microbiocidal isothiazolones which comprises admixing solutions of isothiazolone and a stabilizing amount of metal salt dissolved in inert volatile organic solvent, with inert finely-divided water-insoluble solid carrier material and evaporating the volatile solvent to yield a flowable, non-dusting non-irritating, stable, non-gassing solid formulation of the microbiocidal compound convenient for handling and transporting.

European Patent Office

# EUROPEAN SEARCH REPORT

Application number

EP 83 30 5577

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 105 431 (S.N. LEWIS et al.) * Table 1; examples 7,36,37,38; column 15, lines 29-37; column 19, lines 47-59; column 20, lines 55-62; column 21, lines 13-18; claims 1-14, 25-27 * | 1-7,10 | A 01 N 43/80<br>A 01 N 25/32<br>A 01 N 25/22<br>A 01 N 25/12<br>C 02 F 1/50 |
| D,X | US-A-4 241 214 (G.A. MILLER et al.) * Table 1; examples 1-17, 21-26; column 14, line 58 - column 15, line 2; column 15, line 64 - column 16, line 3, lines 22-27; claims 1-3 * | 1-7,10 | |
| D,X | US-A-3 517 022 (G.A. MILLER et al.) * Column 1, line 51 - column 2, line 14; column 7, lines 47-55; column 8, lines 35-42, 61-66 * | 1-3,7, 10 | TECHNICAL FIELDS SEARCHED (Int. Cl. 3) |
| A | GB-A-2 087 388 (CENTRE INTERNATIONAL DE RECHERCHES DERMATOLOGIQUES) * Page 7, lines 7-24, 43-49; claim 1 * | 1-3,8 | A 01 N<br>C 02 F |
| A | US-A-4 292 430 (J. ROKACH et al.) * Column 4, lines 43-57; column 5, lines 3-58; claims * | 1-3,7, 10 | |

The present search report has been drawn up for all claims

| Place of search | Date of completion of the search | Examiner |
|---|---|---|
| THE HAGUE | 18-01-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document